# EUROPÄISCHE PATENTSCHRIFT

(11) **EP 2 228 632 B1**
(45) Veröffentlichungstag und Bekanntmachung des Hinweises auf die Patenterteilung: **03.10.2018**
(21) Anmeldenummer: 09154921.2
(22) Anmeldetag: 11.03.2009
(51) Int. Cl.: G01N 9/24, G01F 23/288

(54) **Radiometrisches Messgerät mit Zweileiterversorgung**
Radiometric measuring device with dual cable supply
Appareil de mesure radiométrique doté d'une alimentation à deux conducteurs

(43) Veröffentlichungstag der Anmeldung: 15.09.2010
(73) Patentinhaber: VEGA Grieshaber KG, 77709 Wolfach (DE)
(72) Erfinder: Fehrenbach, Josef, 77716, Haslach (DE); Deck, Thomas, 77709, Wolfach (DE); Rauer, Winfried, 77716, Fischerbach (DE); Sack, Holger, 77761, Schiltach (DE)
(74) Vertreter: Maiwald Patent- und Rechtsanwaltsgesellschaft mbH

(56) Entgegenhaltungen:
- WO-A2-2004/015646
- DE-A1- 10 048 559
- US-A- 6 014 100
- US-A1- 2005 116 157
- US-A1- 2007 278 404

## Beschreibung

### Gebiet der Erfindung

Die Erfindung betrifft die radiometrische Füllstand- oder Dichtemessung eines Füllguts mit einer Zweileiterversorgung. Insbesondere betrifft die Erfindung ein radiometrisches Messgerät mit einer Zweileiterversorgung. Ferner betrifft die Erfindung ein Messsystem und ein Messverfahren zur radiometrischen Füllstand- oder Dichtemessung eines Füllguts mit einer Zweileiterversorgung.

### Hintergrund der Erfindung

Radiometrische Messgeräte können in einer Vier-Leitertechnik ausgeführt sein, bei der Versorgungsleitungen von Signalleitungen getrennt sind. Dabei müssen immer vier Leitungen zum Gerät verkabelt werden, was einen hohen Stromverbrauch, eine hohe Eigenerwärmung und einen hohen Schaltungsaufwand zur Folge haben kann.

Zweileiterausführungen für radiometrische Messgeräte können nur eine begrenzte Leistung zur Verfügung stellen.

US 6,014,100 beschreibt ein Radar-Füllstandmessgerät mit einer Zweileiterversorgung, wobei der Prozessor zum Wechseln von einem Aktivmodus in einen Stromsparmodus ausgeführt ist. US 2007/0278404 A1 beschreibt ein radiometrisches Füllstandmessgerät mit mindestens zwei Detektoren. Die Messsignale werden über eine einzelne Leitung übermittelt. Die Energieversorgung des Sensors erfolgt gesondert.

### Zusammenfassung der Erfindung

Es kann als Aufgabe der Erfindung angesehen werden, ein verbessertes Messgerät, ein verbessertes Messsystem und ein verbessertes Messverfahren für radiometrische Füllstands- oder Dichtemessungen eines Füllguts mit Zweileiterversorgung anzugeben.

Die Aufgabe der Erfindung wird durch den Gegenstand der unabhängigen Ansprüche gelöst, während vorteilhafte Weiterentwicklungen der Erfindung durch die abhängigen Ansprüche verkörpert werden.

Gemäß einer beispielhaften Ausführung der Erfindung wird ein Messgerät mit einer Zweileiterversorgung für eine radiometrische Füllstand- und/ oder Dichtemessung eines Füllguts mit einem Prozessor bereitgestellt, wobei der Prozessor zum Wechseln von einem Aktivmodus in einen Stromsparmodus ausgeführt ist.

Ein derartiges Messgerät ermöglicht eine geringe Energieaufnahme, einen geringen Verkabelungsaufwand und das Erzielen besserer Messergebnisse aufgrund geringerer Eigenerwärmung des Messgeräts. Es können einfachere, kostengünstigere Schaltungen mit diesem Messgerät realisiert werden, wobei Zweileitergeräte in den Ausführungen von 4 bis 20 mA, als Feldbusgerät nach Profibus (PA) oder Foundation Fieldbus Standard ausgeführt sein können.

Ferner kann durch ein derartiges Messgerät mit einer Zweileiterausführung, bei der nur eine begrenzte Leistung zur Verfügung steht, durch eine dynamische Anpassung der Leistungsaufnahme an die zur Verfügung stehende Leistung (Power Management) eine Reduzierung der Leistungsaufnahme erzielt werden.

Gemäß einem Ausführungsbeispiel der Erfindung weist das Messgerät weiterhin eine Energie-Speichereinheit auf, wobei die Energie-Speichereinheit zur Speicherung von Energie sowie zum Auffangen bzw. Zwischenspeichern von Strömen von Komponenten des Messgeräts ausgeführt ist. Die Energie-Speichereinheit ist ferner zur Versorgung des Messgeräts mit Strom ausgeführt.

Gemäß einer weiteren beispielhaften Ausführung der Erfindung ist die Energie-Speichereinheit als Pufferelko ausgeführt. Die Energie-Speichereinheit kann als Kondensator ausgeführt sein, insbesondere als Doppelschicht-Kondensator.

Gemäß eines weiteren Ausführungsbeispiels der Erfindung weist das Messgerät einen Signalverstärker und wenigstens einen Komparator auf, wobei der Prozessor für den Stromsparmodus zum Abschalten von zumindest dem Signalverstärker oder dem wenigstens einen Komparator ausgeführt ist. Dies bedeutet, dass der Prozessor entweder den Signalverstärker oder wenigstens einen Komparator abschaltet oder den Signalverstärker und den Komparator abschaltet.

Ein derartiges Messgerät mit abschaltbarem Signalverstärker und Komparator(en) ermöglicht eine Reduzierung der Leistungsaufnahme durch ein Strom sparendes Design des Signalverstärkers. Des weiteren wird die Leistungsaufnahme durch das Abschalten des Signalverstärkers oder des Komparators durch den Prozessor bei keinem vorliegenden Messsignal reduziert, da in diesem Zustand keine Leistung durch den Signalverstärker oder den Komparator verbraucht wird.

Gemäß einer weiteren beispielhaften Ausführung der Erfindung weist das Messgerät weiterhin einen Schalter auf, wobei der Prozessor oder eine andere Steuervorrichtung zum (gegebenenfalls automatischen) Steuern des Schalters ausgeführt ist, und der Schalter die Energieversorgung des wenigstens einen Komparators und Signalverstärkers über die Energie-Speichereinheit regelt.

Gemäß einer weiteren beispielhaften Ausführung der Erfindung ist der Signalverstärker des Messgeräts für einen intermittierenden Betrieb ausgeführt.

Gemäß eines weiteren Ausführungsbeispiels der Erfindung ist der Prozessor des Messgeräts für einer intermittierenden Betrieb ausgeführt.

Ein derartiger Prozessor des Messgeräts, der für einen intermittierenden Betrieb ausgeführt ist, ermöglicht es, dass der Prozessor den Leistungsverbrauch des Messgeräts in Abhängigkeit von einem vorliegenden Messsignal regelt und so die Leistungsaufnahme insgesamt reduziert, beispielsweise durch das Abschalten des Signalverstärkers und/oder des(r) Komparators(en) falls kein Messignal vorliegt.

Gemäß eines weiteren Ausführungsbeispiels der Erfindung ist ein Messsystem zur radiometrischen Messung eines Füllstandes oder einer Dichte eines Füllguts mit einem Messgerät gemäß den oben aufgeführten Ausführungsbeispielen und mit einer radioaktiven Quelle beansprucht.

Ein derartiges Messsystem besteht aus einer radioaktiven Quelle und einem radiometrischen Sensor. Das Messsystem ist als Level- und/ oder Dichtemesssystem einsetzbar und basiert auf dem Szintillationsprinzip. Der radiometrische Sensor besteht aus Zweileiter-Netzteil, einem Prozessor, einer Hochspannungserzeugung mittels einer Spannungsvervielfachung, einem Szintillator, einem Photomultiplier, einem Signalverstärker und aus einem oder mehreren Komparator(en).

Der Szintillator wandelt die Gamma-Strahlung (bei der es sich z.B. um Gammastrahlung oder andere ionisierende Strahlung wie α- oder β-Strahlung handelt) in Lichtblitze um, die von dem Photomultiplier in Strompulse umgewandelt werden. Der anschließende Signalverstärker verstärkt die Strompulse. Komparatoren wandeln die verstärkten Strompulse in digitale Pulse um, die vom Prozessor gezählt werden. Abhängig vom Prozesswert ändert sich die Intensität der durch den Behälter bzw. das Füllgut gestrahlten radioaktiven Strahlung und damit die Pulsrate.

Der Prozessor bestimmt aus der Pulsrate den physikalischen Prozesswert. Um die Leistungsaufnahme zu reduzieren, wird ein Strom sparender Prozessor verwendet, der Stromsparmodi beherrscht. Er wird aktiviert, sobald ein neuer Messwert vorliegt. Bei sehr wenig zur Verfügung stehender Leistung werden der Signalverstärker sowie der(die) Komparator(en) abgeschaltet. Um die Spitzenströme der gestalteten Komponenten aufzufangen, werden Energie-Speichereinheiten wie Pufferelkos verwendet, die langsam geladen werden und kurzzeitig die benötigten Ströme liefern können.

Ein derartiges Messsystem ermöglicht eine Reduzierung der Leistungsaufnahme bei einer Zweileiterausführung mit begrenzter Leistung durch die dynamische Anpassung der Leistungsaufnahme an die zur Verfügung stehende Leistung (Power Management), durch Strom sparendes Design des Signalverstärkers, durch Strom sparendes Design des Hochspannungsnetzteils des Photomultipliers mittels Spannungsvervielfachung, durch intermittierenden Betrieb des Verstärkers und durch intermittierenden Betrieb des Prozessors.

Gemäß einer weiteren beispielhaften Ausführung der Erfindung ist ein Messverfahren zur radiometrischen Messung eines Füllstandes oder einer Dichte eines Füllguts durch ein Messgerät mit einer Zweileiterversorgung angegeben, bei dem ein Prozessor von einem Aktivmodus in einen Stromsparmodus zum Stromsparen umgeschaltet wird und der Prozessor bei Vorliegen eines neuen Messsignals aktiviert wird.

Gemäß einer weiteren Ausführung der Erfindung ist ein Messverfahren angegeben, das weiterhin die folgenden Schritte aufweist: Ein Auffangen von Strömen durch eine Energie-Speichereinheit; eine Stromversorgung durch die Energie-Speichereinheit.

Gemäß einem weiteren Ausführungsbeispiel der Erfindung ist ein Messverfahren aufgeführt, das weiterhin die folgenden Schritte aufweist: Ein Abschalten eines Signalverstärkers und eines wenigstens einen Komparators durch den Prozessor für den Stromsparmodus. Dies bedeutet, dass entweder der Signalverstärker oder wenigstens einer der Komparatoren oder der Signalverstärker und wenigstens einer der Komparatoren abgeschaltet werden können.

Gemäß einer weiteren Ausführung der Erfindung ist ein Messverfahren bereitgestellt, das weiterhin die folgenden Schritte aufweist: Ein intermittierendes Betreiben des Signalverstärkers; ein intermittierendes Betreiben des Prozessors.

Gemäß einem weiteren Ausführungsbeispiel der Erfindung ist ein Programmelement angegeben, das, wenn es auf einem Prozessor eines Messgeräts (100) mit einer Zweileiterversorgung (101) zur radiometrischen Messung eines Füllstandes oder einer Dichte eines Füllguts ausgeführt wird, den Prozessor anleitet, die folgenden Schritte durchzuführen: Ein Umschalten eines Prozessors von einem Aktivmodus in einen Stromsparmodus zum Stromsparen und ein Aktivieren des Prozessors bei Vorliegen eines neuen Messsignals. Weiterhin können die folgenden Schritte vorgesehen sein: Ein Abschalten eines Signalverstärkers und eines wenigstens einen Komparators durch den Prozessor für den Stromsparmodus; ein intermittierendes Betreiben des Signalverstärkers; ein intermittierendes Betreiben des Prozessors.

Gemäß einem weiteren Ausführungsbeispiel der Erfindung ist ein computerlesbares Medium beansprucht, auf dem ein Programmelement gespeichert ist, das, wenn es auf einem Prozessor eines Messgeräts (100) mit einer Zweileiterversorgung (101) zur radiometrischen Messung eines Füllstandes oder einer Dichte eines Füllguts ausgeführt wird, den Prozessor anleitet, die folgenden Schritte durchzuführen: Ein Umschalten eines Prozessors von einem Aktivmodus in einen Stromsparmodus zum Stromsparen; ein Aktivieren des Prozessors bei Vorliegen eines neuen Messsignals. Weiterhin können die folgenden Schritte vorgesehen sein: Ein Abschalten eines Signalverstärkers und eines wenigstens einen Komparators durch den Prozessor für den Stromsparmodus; ein intermittierendes Betreiben des Signalverstärkers; ein intermittierendes Betreiben des Prozessors.

Die einzelnen Merkmale der verschiedenen Ausführungsbeispiele können selbstverständlich auch untereinander kombiniert werden, wodurch sich zum Teil auch vorteilhafte Wirkungen einstellen können, die über die Summe der Einzelwirkungen hinausgehen, selbst wenn diese nicht ausdrücklich beschrieben sind.

Es ist insbesondere zu beachten, dass die hier und im Folgenden im Hinblick auf das Messgerät und/ oder das Messsystem beschriebenen Merkmale auch in dem Verfahren, dem Programmelement und dem computerlesbaren Medium implementierbar sind, und umgekehrt.

Diese und andere Aspekte der Erfindung werden durch die Bezugnahme auf die hiernach beschriebenen beispielhaften Ausführungsformen erläutert und verdeutlicht.

### Kurze Beschreibung der Zeichnungen

- Fig. 1: zeigt eine schematische Darstellung eines radiometrischen Messgeräts mit Zweileiterversorgung gemäß einem Ausführungsbeispiel der Erfindung.
- Fig. 2: zeigt eine schematische Darstellung eines radiometrischen Messsystems mit Zweileiterversorgung gemäß einem Ausführungsbeispiel der Erfindung.
- Fig. 3: zeigt ein Flussdiagramm eines radiometrischen Messverfahrens mit Zweileiterversorgung gemäß einem Ausführungsbeispiel der Erfindung.

### Detaillierte Beschreibung von beispielhaften Ausführungsformen

Im Folgenden werden unter Bezugnahme auf die beigefügten Zeichnungen Ausführungsbeispiele der Erfindung beschrieben.

Die Darstellungen in den Figuren sind schematisch und nicht maßstäblich. In den folgenden Figurenbeschreibungen werden für gleiche oder ähnliche Elemente die gleichen Bezugszeichen verwendet.

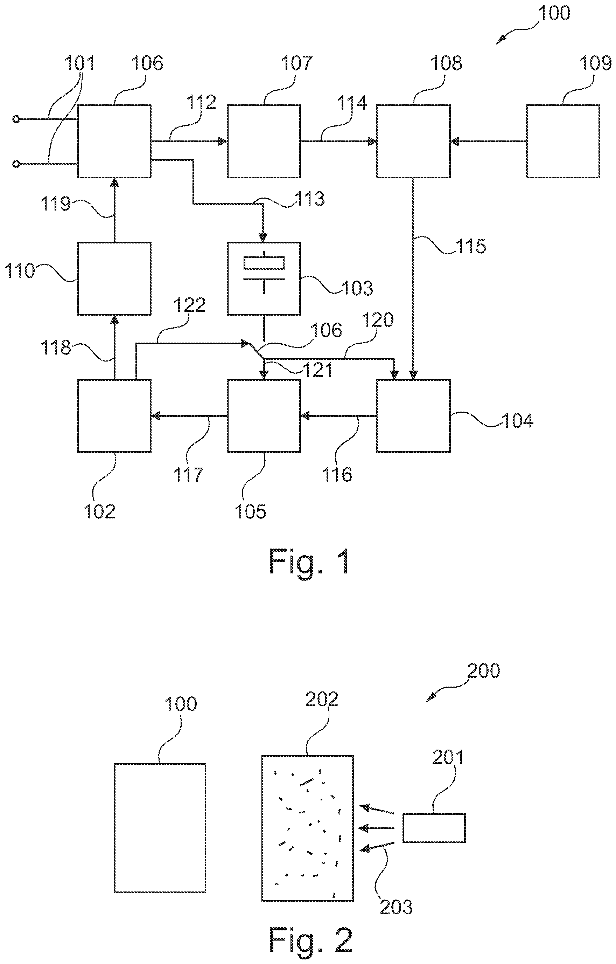

Fig. 1 zeigt ein Messgerät 100 mit einer Zweileiterversorgung 101 für eine radiometrische Füllstand- oder Dichtemessung eines Füllguts. Das Messgerät 100 kann als radiometrischer Sensor bezeichnet werden. Die Zweileiterversorgung 101 versorgt ein Netzteil 106, das über eine Leitung 112 eine Hochspannungserzeugungseinheit 107 und über eine Leitung 113 eine Energiespeichereinheit 103, die als Pufferelko ausgeführt sein kann, versorgt. Die Hochspannungserzeugungseinheit 107 erzeugt Hochspannung beispielsweise mittels Spannungsvervielfachung. Die Hochspannungserzeugungseinheit 107 versorgt über eine Leitung 114 einen Photomultiplier 108 mit Hochspannung.

Ein Szintillator 109 wandelt radioaktive Gamma-Strahlung in Lichtblitze um, die an den Photomultiplier 108 gesendet werden, der die Lichtblitze in Strompulse wandelt. Die Strompulse werden von dem Photomultiplier 108 über eine Leitung 115 an einen Signalverstärker 104 gesendet. Der Signalverstärker 104 verstärkt die Strompulse und leitet die Strompulse über eine Leitung 116 an wenigstens einen Komparator 105, der die Strompulse in digitale Pulse umwandelt. Der Komparator 105 leitet die digitalen Pulse über eine Leitung 117 an einen Prozessor 102. Der Prozessor 102 zählt die Pulse.

Abhängig von Prozesswert ändern sich dabei das radioaktive Feld und damit die Pulsrate. Der Prozessor 102 bestimmt aus der Pulsrate den physikalischen Prozesswert und leitet diesen über eine Leitung 118 an eine Stromausgangs- oder Feldbusanschaltung 110. Die Feldbusanschaltung 110 ist als 4 bis 20 mA Schaltung oder nach Profibus oder Foundation Fieldbus Standard ausgeführt. Die Feldbusanschaltung 110 leitet den physikalischen Prozesswert über eine Leitung 119 an das Netzteil 106, das den Prozesswert über eine der Leitungen 101 der Zweileiterversorgung 101 an eine Auswertungseinheit (nicht dargestellt in Fig. 1) weiterleitet.

Die Energiespeichereinheit 103 versorgt den Signalverstärker 104 via einem Schalter 106 und einer Leitung 120 und den Komparator 105 via dem Schalter 106 und einer Leitung 121 mit Strom bzw. elektrischer Leistung. Der Prozessor 102 steuert den Schalter 106, der die Energieversorgung des wenigstens einen Komparators 105 und des Signalverstärkers 104 über die Energie-Speichereinheit 103 regelt über eine Leitung 122.

Fig. 2 zeigt ein radiometrisches Messsystem 200 mit Zweileiterversorgung zur radiometrischen Füllstand- oder Dichtemessung eines Füllguts mit einem Messgerät 100 und einer radioaktiven Quelle 201. Die radioaktive Quelle 201 sendet beispielsweise radioaktive Gamma-Strahlung 203 auf einen Füllgutbehälter 202, der beispielsweise ein Schüttgut oder eine Flüssigkeit enthält, wobei die radioaktiven Strahlen nach dem Durchdringen des Füllgutbehälters 202 bzw. der Flüssigkeit oder des Schüttgutes des Füllgutbehälters 202 von dem Messgerät 100 empfangen und in einen Messwert umgewandelt werden.

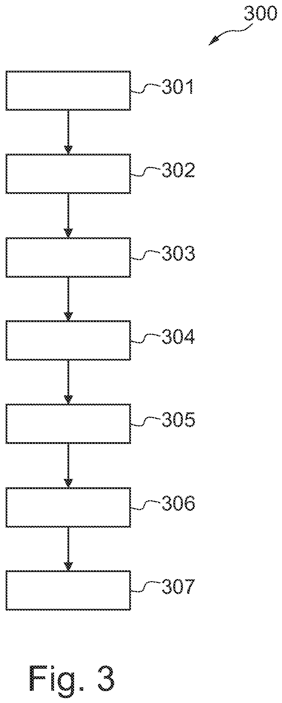

Fig. 3 zeigt ein radiometrisches Messverfahren 300 zur radiometrischen Messung eines Füllstandes oder einer Dichte eines Füllguts durch ein Messgerät 100 mit einer Zweileiterversorgung 101, das folgende Schritte umfasst: Umschalten eines Prozessors 102 von einem Aktivmodus in einen Stromsparmodus zum Stromsparen (Schritt 301); Aktivieren des Prozessors 102 bei Vorliegen eines neuen Messsignals (Schritt 302); Auffangen von Strömen durch eine Energie-Speichereinheit 103, (Schritt 303); Stromversorgung durch die Energie-Speichereinheit 103, (Schritt 304); Abschalten eines Signalverstärkers 104 und eines wenigstens einen Komparators 105 durch den Prozessor 102 für den Stromsparmodus (Schritt 305); intermittierendes Betreiben des Signalverstärkers 104, (Schritt 306) und intermittierendes Betreiben des Prozessors 102, (Schritt 307).

Die Erfindung kann auch in anderen Bereichen als der Füllstand- oder Dichtemessung bei jeglichen radiometrischen Messungen mit einer Zweileiterversorgungverwendet werden. Ergänzend ist darauf hinzuweisen, dass "umfassend" oder "aufweisend" keine anderen Elemente oder Schritte ausschließt und "eine" oder "ein" keine Vielzahl ausschließt. Insbesondere kann das Messgerät beispielsweise also mehr als einen Prozessor, mehr als eine Energie-Speichereinheit, mehr als einen Signalverstärker, mehr als einen Komparator oder mehrere Schalter aufweisen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messgerät (100) mit einer Zweileiterversorgung (101) für eine radiometrische Füllstand- oder Dichtemessung eines Füllguts, das Messgerät (100) aufweisend:
einen Prozessor (102);
einen Signalverstärker (104);
wenigstens einen Komparator (105);
wobei der Prozessor (102) zum Wechseln von einem Aktivmodus in einen Stromsparmodus ausgeführt ist und weiterhin für den Stromsparmodus zum Abschalten von zumindest dem Signalverstärker (104) oder dem wenigstens einen Komparator (105) ausgeführt ist, falls kein Messsignal vorliegt.

2. Messgerät (100) nach Anspruch 1, das Messgerät (100) weiterhin aufweisend:
eine Energie-Speichereinheit (103);
wobei die Energie-Speichereinheit (103) zur Speicherung von Energie ausgeführt ist;
wobei die Energie-Speichereinheit (103) zum Auffangen von Strömen von Komponenten des Messgeräts (100) ausgeführt ist;
wobei die Energie-Speichereinheit (103) zur Versorgung des Messgeräts (100) mit Strom ausgeführt ist.

3. Messgerät (100) nach Anspruch 2,
wobei die Energie-Speichereinheit (103) als Pufferelko ausgeführt ist.

4. Messgerät (100) nach einem der vorhergehenden Ansprüche, das Messgerät (100) weiterhin aufweisend:
einen Schalter (106);
wobei der Prozessor (102) zum Steuern des Schalters (106) ausgeführt ist;
wobei der Schalter (106) die Energieversorgung des wenigstens einen Komparators (105) und Signalverstärkers (104) über die Energie-Speichereinheit (103) regelt.

5. Messgerät (100) nach einem der vorhergehenden Ansprüche,
wobei der Signalverstärker (104) für einen intermittierenden Betrieb ausgeführt ist.

6. Messgerät (100) nach einem der vorhergehenden Ansprüche,
wobei der Prozessor (102) für einen intermittierenden Betrieb ausgeführt ist.

7. Messsystem (200) zur radiometrischen Messung eines Füllstandes oder einer Dichte eines Füllguts mit einem Messgerät (100) nach einem der Ansprüche 1 bis 6 und mit einer radioaktiven Quelle (201).

8. Messverfahren (300) zur radiometrischen Messung eines Füllstandes oder einer Dichte eines Füllguts durch ein Messgerät (100) mit einer Zweileiterversorgung (101), das Messverfahren (300) aufweisend die Schritte:
Umschalten eines Prozessors (102) von einem Aktivmodus in einen Stromsparmodus zum Stromsparen (301);
Abschalten eines Signalverstärkers (104) und wenigstens eines Komparators (105) durch den Prozessor (102) für den Stromsparmodus (305); Aktivieren des Prozessors (102) bei Vorliegen eines neuen Messsignals (302).

9. Messverfahren (300) nach Anspruch 8, das Messverfahren (300) weiterhin aufweisend die Schritte:
Auffangen von Strömen durch eine Energie-Speichereinheit (103, 303); Stromversorgung durch die Energie-Speichereinheit (103, 304).

10. Messverfahren (300) nach einem der Ansprüche 8 bis 9, das Messverfahren (300) weiterhin aufweisend die Schritte;
Intermittierendes Betreiben des Signalverstärkers (104, 306);
Intermittierendes Betreiben des Prozessors (102, 307).

11. Programmelement, das, wenn es auf einem Prozessor (102) eines Messgeräts (100) mit einer Zweileiterversorgung (101) zur radiometrischen Messung eines Füllstandes oder einer Dichte eines Füllguts ausgeführt wird, den Prozessor (102) anleitet, die folgenden Schritte durchzuführen:
Umschalten eines Prozessors (102) von einem Aktivmodus in einen Stromsparmodus zum Stromsparen (301);
Abschalten eines Signalverstärkers (104) und wenigstens eines Komparators (105) durch den Prozessor (102) für den Stromsparmodus (305);
Aktivieren des Prozessors (102) bei Vorliegen eines neuen Messsignals (302).

12. Computerlesbares Medium, auf dem ein Programmelement gespeichert ist, das, wenn es auf einem Prozessor (102) eines Messgeräts (100) mit einer Zweileiterversorgung (101) zur radiometrischen Messung eines Füllstandes oder einer Dichte eines Füllguts ausgeführt wird, den Prozessor (102) anleitet, die folgenden Schritte durchzuführen:
Umschalten eines Prozessors (102) von einem Aktivmodus in einen Stromsparmodus zum Stromsparen (301);
Abschalten eines Signalverstärkers (104) und wenigstens eines Komparators (105) durch den Prozessor (102) für den Stromsparmodus (305);
Aktivieren des Prozessors (102) bei Vorliegen eines neuen Messsignals (302).

## Claims

1. A measuring device (100) with a two-wire supply (101) for radiometric measurement of a fill level or density of a fill material, the measuring device (100) comprising:
a processor (102);
a signal amplifier (104);
at least a comparator (105);
wherein the processor (102) is designed to change from an active mode to a power-saving mode and further, for the power-saving mode, to switch off at least the signal amplifier (104) or the at least one comparator (105), if no measuring signal is present.

2. The measuring device (100) according to claim 1, the measuring device (100) further comprising:
an energy storage unit (103);
wherein the energy storage unit (103) is designed to store energy;
wherein the energy storage unit (103) is designed to collect currents of components of the measuring device (100);
wherein the energy storage unit (103) is designed to supply the measuring device (100) with current.

3. The measuring device (100) according to claim 2,
wherein the energy storage unit (103) is designed as an electrolytic power capacitor.

4. The measuring device (100) according to any one of the preceding claims, the measuring device (100) further comprising:
a switch (106);
wherein the processor (102) is designed for controlling the switch (106);
wherein the switch (106) regulates the energy supply of the at least one comparator (105) and signal amplifier (104) by way of the energy storage unit (103).

5. The measuring device (100) of any one of the preceding claims,
wherein the signal amplifier (104) is designed for an intermittent operation.

6. The measuring device (100) of any one of the preceding claims,
wherein the processor (102) is designed for an intermittent operation.

7. A measuring system (200) for radiometric measurement of a fill level or a density of a fill material with a measuring device (100) according to any one of claims 1 to 6 and with a radioactive source (201).

8. A measuring method (300) for radiometric measurement of a fill level or a density of a fill material by means of a measuring device (100) with a two-wire supply (101), the measuring method (300) comprising the steps of:
switching a processor (102) from an active mode to a power-saving mode for saving power (301); switching off a signal amplifier (104) and at least one comparator (105) by means of the processor (102) for the power-saving mode (305);
activating the processor (102) if a new measuring signal (302) is present.

9. A measuring method (300) according to claim 8, the measuring method (300) further comprising the steps of:
collecting currents by means of an energy storage unit (103, 303);
supplying power by means of the energy storage unit (103, 304).

10. The measuring method (300) according to one of claims 8 or 9, the measuring method (300) further comprising the step of:
intermittent operation of the signal amplifier (104, 306);
intermittent operation of the processor (102, 307).

11. A program element which, when executed on a processor (102) of a measuring device (100) with a two-wire supply (101) for radiometric measurement of a fill level or a density of a fill material, instructs the processor (102) to carry out the following steps:
switching a processor (102) from an active mode to a power-saving mode for saving power (301);
switching off a signal amplifier (104) and at least one comparator (105) by means of the processor (102) for the power-saving mode (305);
activating the processor (102) when a new measuring signal (302) is present.

12. A computer-readable medium on which a program element is stored which, when executed on a processor (102) of a measuring device (100) with a two-wire supply (101) for radiometric measurement of a fill level or a density of a fill material, instructs the processor (102) to carry out the following steps:
switching a processor (102) from an active mode to a power-saving mode for saving power (301);
switching off a signal amplifier (104) and at least one comparator (105) by means of the processor (102) for the power-saving mode (305);
activating the processor (102) when a new measuring signal (302) is present.

## Revendications

1. Appareil de mesure (100) ayant une alimentation à deux fils (101) pour une mesure radiométrique d'un niveau de remplissage ou d'une densité d'un matériau de remplissage, l'appareil de mesure (100) comportant :
un processeur (102),
un amplificateur de signaux (104),
au moins un comparateur (105),
dans lequel le processeur (102) est configuré pour passer d'un mode actif à un mode d'économie d'énergie et est en outre configuré, en mode d'économie d'énergie, pour arrêter le au moins un amplificateur de signaux (104) ou le au moins un comparateur (105) si aucun signal de mesure n'est présent.

2. Appareil de mesure (100) selon la revendication 1, l'appareil de mesure (100) comportant en outre :
une unité d'accumulation d'énergie (103),
dans lequel l'unité d'accumulation d'énergie (103) est configurée pour accumuler de l'énergie,
dans lequel l'unité d'accumulation d'énergie (103) est configurée pour collecter des courants provenant de composants de l'appareil de mesure (100),
dans lequel l'unité d'accumulation d'énergie (103) est configurée pour alimenter l'appareil de mesure (100) en courant.

3. Appareil de mesure (100) selon la revendication 2,
dans lequel l'unité d'accumulation d'énergie (103) est configurée comme un condensateur électrolytique tampon.

4. Appareil de mesure (100) selon l'une des revendications précédentes, l'appareil de mesure (100) comportant en outre :
un commutateur (106),
dans lequel le processeur (102) est configuré pour commander le commutateur (106),
dans lequel le commutateur (106) régule l'alimentation en énergie du au moins un comparateur (105) et de l'amplificateur de signaux (104) par l'intermédiaire de l'unité d'accumulation d'énergie (103).

5. Appareil de mesure (100) selon l'une des revendications précédentes,
dans lequel l'amplificateur de signaux (104) est configuré pour un fonctionnement intermittent.

6. Appareil de mesure (100) selon l'une des revendications précédentes,
dans lequel le processeur (102) est configuré pour un fonctionnement intermittent.

7. Système de mesure (200) pour la mesure radiométrique d'un niveau de remplissage ou une densité d'un matériau de remplissage en utilisant un appareil de mesure (100) selon l'une des revendications 1 à 6 et une source radioactive (201).

8. Procédé de mesure (300) pour la mesure radiométrique d'un niveau de remplissage ou d'une densité d'un matériau de remplissage au moyen d'un appareil de mesure (100) ayant une alimentation à deux fils (101), le procédé de mesure (300) comportant les étapes consistant à :
commuter un processeur (102) d'un mode actif à un mode d'économie d'énergie pour économiser de l'énergie électrique (301),
arrêter un amplificateur de signaux (104) et au moins un comparateur (105) par l'intermédiaire du processeur (102) pour le mode d'économie d'énergie (305),
activer le processeur (102) si un nouveau signal de mesure (302) est présent.

9. Procédé de mesure (300) selon la revendication 8, le procédé de mesure (300) comportant en outre les étapes consistant à :
collecter des courants par l'intermédiaire d'une unité d'accumulation d'énergie (103, 303),
fournir du courant par l'unité d'accumulation d'énergie (103, 304).

10. Procédé de mesure (300) selon l'une des revendications 8 à 9, le procédé de mesure (300) comportant en outre les étapes consistant à :
faire fonctionner l'amplificateur de signaux (104, 306) par intermittence,
faire fonctionner le processeur (102, 307) par intermittence.

11. Elément de programme qui, lorsqu'il est exécuté sur un processeur (102) d'un appareil de mesure (100) ayant une alimentation à deux fils (101) pour la mesure radiométrique d'un niveau de remplissage ou d'une densité d'un matériau de remplissage, amène le processeur (102) à exécuter les étapes suivantes consistant à :
commuter un processeur (102) d'un mode actif à un mode d'économie d'énergie pour économiser de l'énergie électrique (301),
arrêter un amplificateur de signaux (104) et au moins un comparateur (105) par l'intermédiaire du processeur (102) pour le mode d'économie d'énergie (305),
activer le processeur (102) si un nouveau signal de mesure (302) est présent.

12. Support lisible par ordinateur, sur lequel est stocké un élément de programme qui, lorsqu'il est exécuté sur un processeur (102) d'un appareil de mesure (100) ayant une alimentation à deux fils (101) pour la mesure radiométrique d'un niveau de remplissage ou d'une densité d'un matériau de remplissage, amène le processeur (102) à exécuter les étapes suivantes consistant à :
commuter un processeur (102) d'un mode actif à un mode d'économie d'énergie pour économiser de l'énergie électrique (301),
arrêter un amplificateur de signaux (104) et au moins un comparateur (105) par l'intermédiaire du processeur (102) pour le mode d'économie d'énergie (305),
activer le processeur (102) si un nouveau signal de mesure (302) est présent.
